# EUROPÄISCHE PATENTSCHRIFT

(11) **EP 1 621 875 B1**
(45) Veröffentlichungstag und Bekanntmachung des Hinweises auf die Patenterteilung: **17.10.2007**
(21) Anmeldenummer: 05016059.7
(22) Anmeldetag: 23.07.2005
(51) Int. Cl.: G01N 27/00, F03G 7/00, H01G 9/042

(54) **Element, umfassend zwei Elektroden aus nanoskaligen porösen Metallen, Anordnung, die mehrere Elemente umfasst, und deren Verwendung**
Element with two electrodes made of nanoscale porous metals, device comprising a plurality of elements, and their use
Element comprenant deux électrodes en métaux poreux nanométriques, dispositif comprenant plusieurs élements, et leur utilisation

(30) Priorität: 31.07.2004 DE 102004037288
(43) Veröffentlichungstag der Anmeldung: 01.02.2006
(73) Patentinhaber: Forschungszentrum Karlsruhe GmbH, 76133 Karlsruhe (DE)
(72) Erfinder: Kramer, Dominik Dr., 76344 Eggenstein-Leopoldshafen (DE)

(56) Entgegenhaltungen:
- US-B1- 6 555 945
- US-B1- 6 751 083
- BAUGHMAN R H, CUI C, ZAKHIDOV A A: "Carbon nanotube actuators" SCIENCE, Bd. 284, 21. Mai 1999 (1999-05-21), Seiten 1340-1344, XP002350962
- WEISSMÜLLER J, VISWANATH R N: "Charge-Induced reversible strain in a metal" SCIENCE, Bd. 300, 11. April 2003 (2003-04-11), Seiten 312-315, XP002350961
- BAUGHMAN R H: "Muscles made from Metal" SCIENCE, Bd. 300, 11. April 2003 (2003-04-11), Seiten 268-269, XP002350963

## Beschreibung

Die Erfindung betrifft ein Element, das zwei Elektroden aus nanoskaligen porösen Metallen, die sich in einem gemeinsamen Elektrolyten befinden, umfasst, eine Anordnung, die meherere derartige Elemente umfasst, und deren Verwendung.

Der *spezifische potentialabhängige Dehnungskoeffizient Δ1*/*1* wird allgemein als relative Längenänderung der betrachteten Elektrode mit der Länge 1 bei einer Änderung des Elektrodenpotentials definiert. Δ1/1 wird also aus der absoluten Längenänderung Δ1 bei einer Änderung des Potentials der Elektrode und der Länge 1 vor dieser Änderung berechnet.

Im Falle, dass Δ1/1 nicht vom tatsächlichen Wert des Elektrodenpotentials abhängt, lässt sich eine vereinfachte Definition angeben: Δ1/1 ist, bezogen auf die potentialfreie Länge 1 der betrachteten Elektrode, die Längenänderung Δ1, die aus dem Anlegen eines elektrischen Potentials zwischen der Elektrode und einer Referenzelektrode in einem gemeinsamen Elektrolyten resultiert.

Ein positives Vorzeichen von Δ1/1 ergibt sich, wenn sich das Material ausdehnt, wenn sein Potential in positive Richtung gebracht wird, d.h. das Material wird stärker positiv aufgeladen oder wenn seine negative Ladung wird verringert. Ein positives Vorzeichen von Δ1/1 ergibt sich auch dann, wenn sich das Material beim Anlegen eines stärker negativen Potentials zusammenzieht (kontrahiert). Entsprechend erhält man ein negatives Vorzeichen von Δ1/1 im Falle der Kontraktion des Elektroden-Materials bei Anlegen eines positiveren Potentials bzw. bei Ausdehnung des Elektroden-Materials beim Anlegen eines negativeren Potentials, jeweils bezogen auf den Zustand vor der Änderung des Potentials.

Die WO 00/50771 A1 offenbart ein Element, das zwei Elektroden aus einem nanoskaligen porösen Material umfasst, die sich in einem gemeinsamen Elektrolyten befinden. Um ein solches Element, bei dem die Auslenkungen der beiden Elektroden *in Phase* erfolgen, aufzubauen, werden nur Kohlenstoff-Nanoröhren eingesetzt. Da Δ1/1 von Kohlenstoff-Nanoröhren vom angelegten Potential abhängt, d.h. je nach Spannung ein positives oder ein negatives Vorzeichen aufweist, ist ein derartiges Element nur unter speziellen Bedingungen so nutzbar, dass beide Elektroden *in Phase* arbeiten. Hierzu müssen die beiden Elektroden stets in verschiedenen Potentialbereichen betrieben werden. Die Potentiale der Elektroden lassen sich jedoch nicht unabhängig voneinander variieren, da die Ladungen auf den Elektroden nicht unabhängig geändert werden können und das Potential von der Ladungsdichte auf der Elektrodenoberfläche abhängt bzw. diese bestimmt. Daher ist für einen Betrieb *in Phase* eine genaue Anpassung der Potentialbereiche beider Elektroden erforderlich, was zumindest eine genaue Einhaltung eines geeigneten Spannungsbereiches bedingt, eventuell zusätzlich noch eine Vorbehandlung der Elektroden. Außerdem ist eine geeignete Wahl der relativen Mengen der Elektrodenmaterialien erforderlich, auch im Hinblick auf eine optimale Nutzung der Spannungsbereiche. Dies führt aber dazu, dass Gesamtmasse und -Volumen deutlich erhöht sind; sie werden über dem doppelten Wert einer Elektrode mit optimaler Ausnutzung des Potentialbereichs liegen. Weiterhin ist der Betrieb dieses Elements mit Spannungen um 0 V nicht möglich, da dann beide Elektroden dasselbe Potential und damit denselben Dehnungskoeffizienten aufweisen würden. Außerdem ist ein derartiges Element besonders empfindlich gegenüber der Anwesenheit von Sauerstoff oder anderen Stoffen, die das Potential der beiden Elektroden verschieben.

Aus der DE 199 52 447 C1, der Veröffentlichung J. Weissmüller, R. N. Viswanath, D. Kramer, P. Zimmer, R. Würschum und H. Gleiter, Charge-Induced Reversible Strain in a Metal, Science, Band 300, Seite 312-315 (2003), und dem Kommentar hierzu von Ray H. Baughman, Muscles Made from Metal, Science, Band 300, Seite 268-269 (2003) ist eine Vorrichtung bekannt, die aus einer Elektrode mit einer schwammartigen, perkolierenden elektrisch leitfähigen Schicht aus miteinander verbundenen Nanopartikeln besteht, die mit einem Elektrolyten gefüllte Hohlräume enthält, der die Elektroden benetzt, und die Mittel zum Anlegen einer Spannung zwischen der Elektrode und dem Elektrolyten, d.h. eine Gegenelektrode, umfasst.

Um die Spannung möglichst klein zu halten und damit gleichzeitig eine Zersetzung des Elektrolyten zu verhindern, muss die Gegenelektrode eine der Elektrode vergleichbar große elektrolytbenetzte Oberfläche aufweisen. Hieraus folgt, dass die Gegenelektrode ein der Elektrode vergleichbar großes Volumen besitzen muss, d.h. bei Verwendung einer Gegenelektrode aus Metall auch eine vergleichbar große Masse. Eine derartige Elektroden-Anordnung weist daher ein deutlich größeres Volumen und in der Regel auch eine deutlich größere Masse als das aktive Material aus der schwammartigen, perkolierend elektrisch leitfähigen Schicht auf. Bestehen zum Beispiel beide Elektroden aus demselben Material und besitzen dieselbe Größe, so sind Volumen und Masse der gesamten Vorrichtung mehr als doppelt so groß wie die des aktiven Materials.

Aus den Veröffentlichungen J. Weissmüller, R. N. Viswanath, D. Kramer, P. Zimmer, R. Würschum and H. Gleiter, Charge-Induced Reversible Strain in a Metal, Science, Band 300, Seite 312-315 (2003) und D. Kramer, R. N. Viswanath, J. Weissmüller, Surface Stress Induced Macroscopic Bending of Nanoporous Gold Cantilevers, Nano Letters 4(5), Seiten 793-796 (2004) sind mit Schwefelsäure (H₂SO₄), Perchlorsäure (HClO₄) und Kaliumhydroxid (KOH) Elektrolyten bekannt, in denen die spezifischen potentialabhängigen Dehnungskoeffizienten Δl/l von nanoporösem Gold oder Platin über den gesamten Potentialbereich ( beispielsweise -0.2 bis +1.05 V für Gold in Schwefelsäure oder -0.75 V bis 0.15 V für Platin in Kalilauge, jeweils gemessen gegen eine Silber-Silberchlorid-Referenzelektrode) ein positives Vorzeichen aufweisen. Mit dieser Wahl des nanoskaligen Metalls und des Elektrolyten lässt sich keine Vorrichtung aufbauen, bei der die Auslenkungen der beiden Elektroden in Phase erfolgen.

Ausgehend hiervon ist es die Aufgabe der vorliegenden Erfindung, ein Element, umfassend zwei Elektroden aus nanoskaligen porösen Metallen in einem gemeinsamen Elektrolyten vorzuschlagen, das die vorher genannten Nachteile und Einschränkungen nicht aufweist. Insbesondere soll ein Element, bei dem die Auslenkungen der beiden Elektroden *in Phase* erfolgen, bereitgestellt werden, das eine möglichst kleinere Bauweise oder einen möglichst großen Effekt aufweist und über einen besonders großen Spannungsbereich betrieben werden kann. Es ist weiterhin die Aufgabe der vorliegenden Erfindung, eine Anordnung aus mehreren Elementen sowie Verwendungen des erfindungsgemäßen Elements oder der Anordnung anzugeben.

Diese Aufgabe wird in Bezug auf das Element durch die Merkmale des Anspruchs 1in Bezug auf die Anordnung durch die Merkmale des Anspruchs 7 und in Bezug auf die Verwendung des Elements oder der Anordnung durch die Ansprüche 11 und 12 gelöst. Die Unteransprüche beschreiben vorteilhafte Ausgestaltungen der Erfindung.

Ein erfindungsgemäßes Element umfasst zwei Elektroden, d. h. eine Elektrode und Gegenelektrode aus zwei verschiedenen nanoskaligen porösen Metallen, die sich in einem gemeinsamen Elektrolyten befinden. Im Unterschied zur DE 199 52 447 C1, bei der eine nanoskalige poröse Metallschicht auf einer Elektrode als Träger aufgebracht ist, sind hier vorzugsweise die nanoskaligen porösen Metalle selbst als Elektroden ausgestaltet, können aber ebenso wie in der DE 199 52 447 C1 jeweils auf einer weiteren Elektrode, die als Träger dient, aufgebracht sein.

*Nanoskalig* bedeutet hier, dass, obwohl die Elektrodengröße im Bereich zwischen wenigen Nanometern und mehreren Metern liegen kann, das Material Poren, Kanäle oder sonstige Hohlräume aufweist, wodurch im porösen Metall Strukturen auftreten, die zumindest in einer Raumrichtung eine Dicke zwischen 1 nm und 500 nm besitzen. Erfindungsgemäß handelt es sich um ein nanoskaliges poröses Metall, bei dem diese Dicke im Bereich zwischen 1 nm und 200 nm liegt. Besonders vorteilhaft sind Dicken unterhalb von 20 nm, insbesondere im Bereich von 2-6 nm. Mögliche Strukturen sind z. B. Fäden mit einem Durchmesser von 200 nm, miteinander verbundene Teilchen, Plättchen oder blattartige Strukturen, die von mindestens zwei Seiten mit Elektrolyt bedeckt sind. Die oben angegebene Dicke von 1-500 nm bezeichnet dann den Abstand zwischen zwei Elektrolytschichten, bei fadenartigen Strukturen den Fadendurchmesser usw.

Entscheidend für die Funktionsweise des Elements ist die Wahl des Elektrolyten und der nanoskaligen porösen Metalle für die beiden Elektroden. Ein erfindungsgemäßes Element ist derart aufgebaut, dass sich die spezifischen potentialabhängigen Dehnungskoeffizienten Δ1/1 der beiden verschiedenen nanoskaligen porösen Metalle, aus denen Elektrode und Gegenelektrode bestehen, bei Anlegen eines elektrischen Potentials zwischen diesen beiden Elektroden in ihrem Vorzeichen unterscheiden. Die vorliegende Erfindung geht über die DE 199 52 447 C1 dahingehend hinaus, da hier beide Elektroden, d.h. Elektrode und Gegenelektrode, den gewünschten Effekt nutzen, d.h. sich *in Phase* ausdehnen bzw. kontrahieren.

Besteht zum Beispiel die Elektrode aus einem nanoskaligen porösen Metall, das sich in einem positiven Potential ausdehnt, so dehnt sich die Gegenelektrode, die aus einem anderen nanoskaligen porösen Metall besteht, das sich in einem negativen Potential ausdehnt, ebenfalls aus, da an ihr ja nun ein negatives Potential anliegt, so dass sich der Dehnungseffekt verstärkt. Im Fall, dass sich zwar die Vorzeichen der spezifischen potentialabhängigen Dehnungskoeffizienten Δ1/1 der beiden nanoskaligen porösen Metalle unterscheiden, ihre Absolutwerte (Beträge) aber im Wesentlichen gleich sind, erhält man annähernd die doppelte Längenänderung 2·Δl.

Die vorliegende Erfindung geht also über die WO 00/50771 A1 dahingehend hinaus, dass zwei verschiedene nanoskalige poröse Metalle als Material für die Elektroden eingesetzt werden, dass an jeder Elektrode ein relativ großer Spannungsbereich - im Idealfall der gesamte Doppelschichtbereich - genutzt wird und dass das Element auch mit Spannungen um 0 V betrieben werden kann, so dass es einen höheren Wirkungsgrad aufweist.

Der Aufbau des erfindungsgemäßen Elements erfolgt vorzugsweise derart, dass die Elektroden durch einen oder mehrere Isolatoren voneinander getrennt sind. In einer besonderen Ausgestaltung sind die Elektroden so geformt, dass eine der Elektroden die andere im Wesentlichen umschließt, wobei Zuleitungen zum Anlegen einer Spannung an die umschlossene Elektrode vorgesehen bleiben. Beispielsweise sind beide Elektroden rotationssymmetrisch aufgebaut, so dass die umschlossene Elektrode zylinderförmig von der anderen hohlzylinderförmigen Elektrode umgeben ist.

In einer bevorzugten Ausgestaltung sind weiterhin Mittel zum Druckausgleich für den Elektrolyten vorgesehen. Durch die Längenänderung der beiden Elektroden entsteht im Elektrolyten ein Druck, der sich beispielsweise durch eine Luftblase oder weichen luftgefüllten Schaumstoff ausgleichen lässt.

Überraschenderweise wurde gefunden, dass der spezifische potentialabhängige Dehnungskoeffizient Δ1/1 von nanoporösem Gold ein negatives Vorzeichen aufweist, wenn Natriumfluorid als Elektrolyt eingesetzt wird. Ebenso weist der spezifische potentialabhängige Dehnungskoeffizient Δ1/1 von nanoporösem Palladium oder nanoporösen Palladium-Nickel-Legierungen mit einem Nickelgehalt zwischen 25 % und 40 % ein negatives Vorzeichen auf, wenn Kaliumhydroxid oder Lithiumperchlorat (letzteres gelöst in Ethylacetat) als Elektrolyt eingesetzt wird.

Demgegenüber besitzt der spezifische potentialabhängige Dehnungskoeffizient Δl/l von nanoporösem Platin oder nanoporösem Iridium sowohl in Natriumfluorid als auch in Kaliumhydroxid oder in Lithiumperchlorat (gelöst in Ethylacetat) ein positives Vorzeichen.

Erfindungsgemäße Elemente oder Anordnungen aus mehreren der Elemente eigenen sich als Aktuatoren oder als Sensoren zur Bestimmung von im Elektrolyten gelösten oder gasförmigen Stoffen.

Erfindungsgemäße Elemente weisen eine Reihe von Vorteilen auf. Der Einsatz von zwei unterschiedlichen nanoskaligen porösen Metallen erlaubt es, einen besonders großen Spannungsbereich für den Betrieb des Elements nutzbar zu machen und es mit Spannungen um 0 V zu betreiben. Gegenüber der DE 199 52 447 C1 werden entweder bei vergleichbarem Dehnungseffekt eine kleinere Bauweise oder bei vergleichbarer Größe bzw. Gesamtmasse ein stärkerer Effekt erreicht. Weiterhin können beide Elektroden in der Bewegungsachse angebracht werden, was die Konstruktion symmetrischer Aktuatoren ermöglicht, die sich auch leichter kapseln lassen. Bei geeigneter Kombination von Materialien wird darüber hinaus die Konstruktion von Aktuatoren möglich, die sowohl Zug- als auch Druckspannungen ausüben.

Die Erfindung wird im Folgenden anhand von Ausführungsbeispielen und den Figuren näher erläutert. Es zeigen:
- **Fig. 1**: Querschnitt durch einen rotationssymmetrischen Aktuator.
- **Fig. 2**: Querschnitt durch einen rotationssymmetrischen Aktuator mit röhrenförmiger Elektrode.
- **Fig. 3**: Querschnitt durch einen rotationssymmetrischen Aktuator mit röhrenförmiger Elektrode.
- **Fig. 4**: Querschnitt durch einen Aktuator, der mehrere aufeinander geschichtete Elemente aus Elektrode und Gegenelektrode umfasst.
- **Fig. 5**: Querschnitt durch einen Aktuator, in dem Elektrode und Gegenelektrode jeweils eine kammartige Anordnung bilden und die Zähne der beiden Anordnungen ineinander ragen.
- **Fig. 6**: Längenänderung einer Elektrode aus nanoporösem Gold bei Anlegen eines elektrischen Potentials.

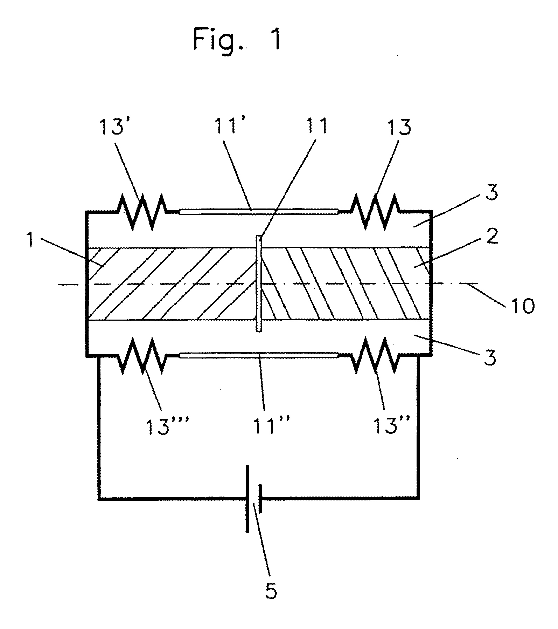

In **Fig. 1** sind die beiden zylinderförmigen Elektroden **1**, **2**, die sich im gemeinsamen Elektrolyten **3** befinden, durch einen Isolator **11** voneinander getrennt. Durch Anlegen einer Spannung an die Spannungsquelle **5** dehnen sich bzw. kontrahieren beide Elektroden **1, 2.** Das Gehäuse ist so aufgebaut, dass hierdurch entstehenden mechanischen Spannungen durch flexible Bereiche **13, 13', 13"** ... aufgefangen werden.

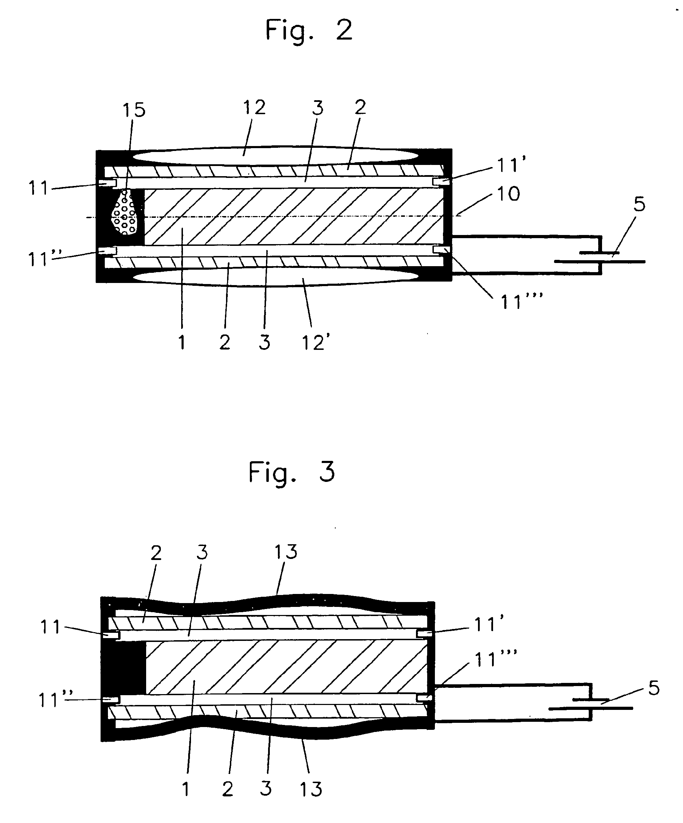

Die **Fig. 2 und 3** zeigen zwei Ausführungsformen von rotationssymmetrischen Aktuatoren mit röhrenförmigen Elektroden **1, 2,** die jeweils durch Isolatoren **11, 11', 11''...** voneinander getrennt sind. Während in **Fig. 2** die entstehenden mechanischen Spannungen im Gehäuse durch isolierende flexible Abdichtungen **12, 12', 12"** ... sowie im Elektrolyten **3** durch eine Luftblase oder weich gefüllter Schaumstoff **15** ausgeglichen werden, ist in **Fig. 3** hierfür ein Gehäuse **14** mit flexiblen Seitenwänden vorgesehen.

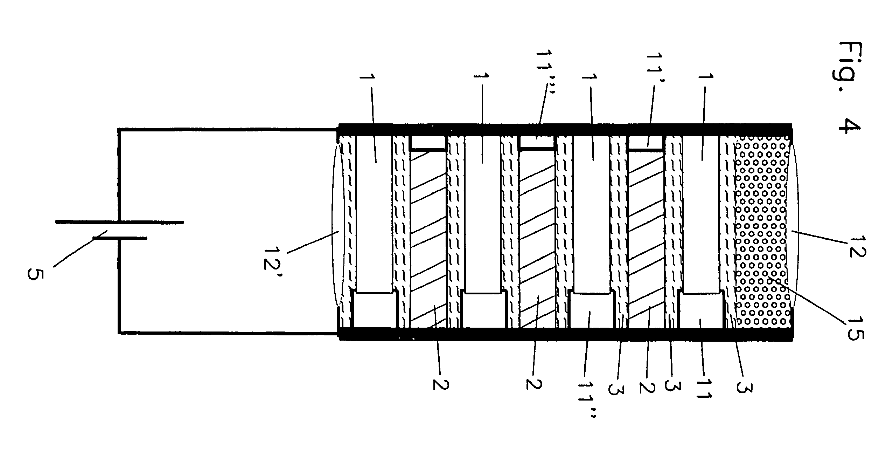

In **Fig. 4** ist ein Aktuator dargestellt, der mehrere aufeinander geschichtete Elemente aus Elektrode **1** und Gegenelektrode **2** in einem gemeinsamen Elektrolyten **3** umfasst, die jeweils durch Isolatoren **11, 11', 11" ...** voneinander getrennt sind. Der Ausgleich der im Gehäuse entstehenden mechanischen Spannungen erfolgt durch isolierende flexible Abdichtungen **12, 12', 12** " ... bzw. im Elektrolyten **3** durch eine Luftblase oder weich gefüllter Schaumstoff **15**.

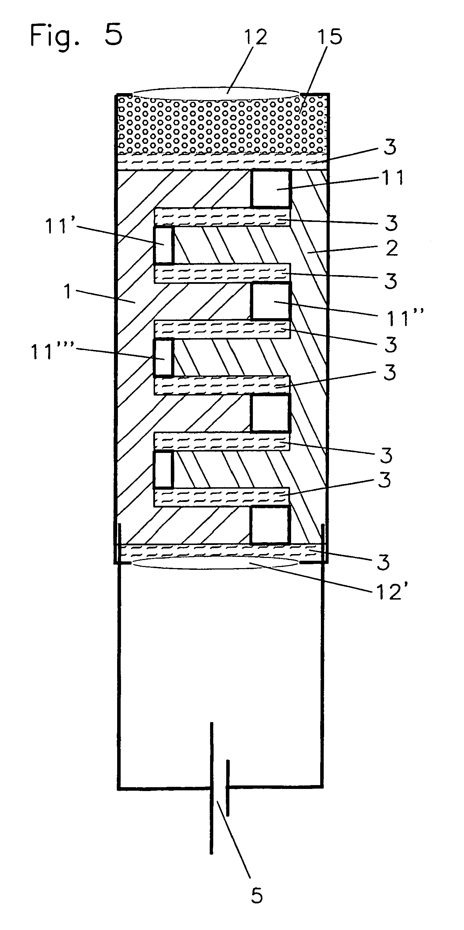

In **Fig. 5** ist ein Aktuator dargestellt, in dem die Elektrode **1** und die Gegenelektrode **2** jeweils eine kammartige Anordnung bilden und die Zähne der beiden Anordnungen im Elektrolyten **3** ineinander ragen. Der Druckausgleich erfolgt wie in **Fig.4.**

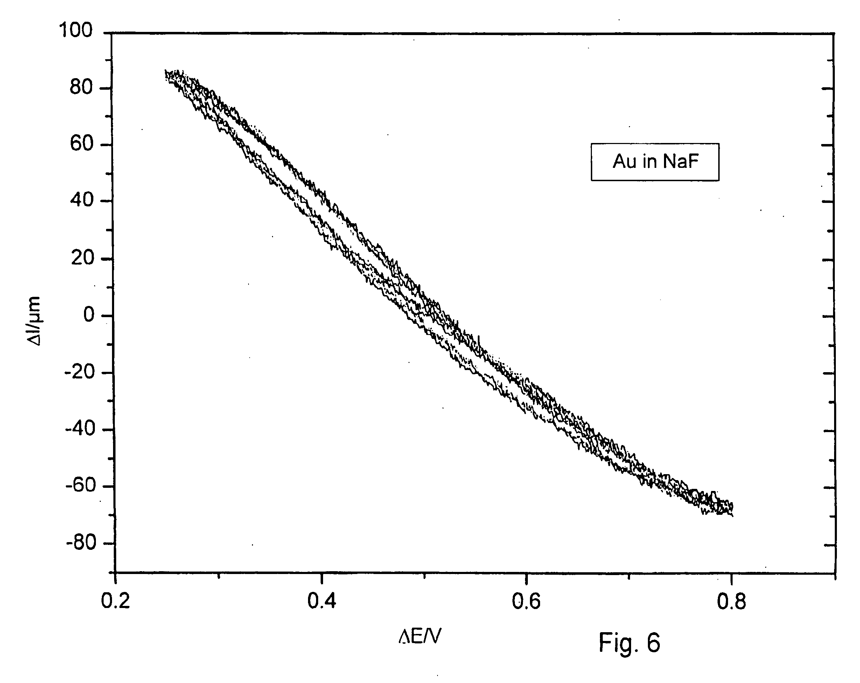

In **Fig. 6** ist die Längenänderung Δl in der Einheit µm einer Elektrode in einem elektrischen Potential ΔE in der Einheit Volt (V) für eine Elektrode aus nanoporösem Gold, die sich in Natriumfluorid NaF als Elektrolyten befindet, dargestellt. Aus der Steigung lässt sich deutlich das negative Vorzeichen des spezifischen potentialabhängigen Dehnungskoeffizienten Δl/l von nanoporösem Gold in Natriumfluorid (Au in NaF) erkennen.

Ebenso wurde gefunden, dass die spezifischen potentialabhängigen Dehnungskoeffizienten von nanoporösem Palladium oder nanoporösen Palladium-Nickel-Legierungen mit einem Nickelgehalt zwischen 25 % und 40 % in einmolarer KOH (Kaliumhydroxid, Kalilauge), in einer einmolaren Lösung von Lithiumperchlorat in Ethylacetat oder in einer einmolaren Lösung von Tetraethylammoniumtetrafluoroboratlösung in γ-Butyrolacton ein negatives Vorzeichen aufweisen.

### Bezugszeichenliste

- **1**: Elektrode
- **2**: Gegenelektrode
- **3**: Elektrolyt
- **5**: Spannungsquelle
- **10**: Rotationssymmetrieachse
- **11, 11', 11"**: starre Isolatoren
- **12, 12', 12"**: isolierende flexible Abdichtungen
- **13, 13', 13"**: flexible Bereiche
- **14**: Gehäuse mit flexiblen Seitenwänden
- **15**: Luftblase oder weich gefüllter Schaumstoff

## Patentansprüche

1. Element, umfassend zwei Elektroden aus zwei verschiedenen nanoskaligen porösen Metallen, die sich in einem gemeinsamen Elektrolyten befinden, wobei sich die spezifischen potentialabhängigen Dehnungskoeffizienten der beiden nanoskaligen porösen Metalle in ihrem Vorzeichen unterscheiden.

2. Element nach Anspruch 1, wobei die Elektroden durch einen Isolator voneinander getrennt sind.

3. Element nach Anspruch 1 oder 2, wobei eine der Elektroden die andere umschließt.

4. Element nach einem der Ansprüche 1 bis 3, wobei für den Elektrolyten Mittel zum Druckausgleich vorgesehen sind.

5. Element nach einem der Ansprüche 1 bis 4, wobei Natriumfluorid als Elektrolyt eingesetzt wird, die Elektrode aus dem nanoskaligen porösen Metall, dessen spezifischer potentialabhängiger Dehnungskoeffizient ein negatives Vorzeichen aufweist, nanoporöses Gold umfasst und die Elektrode aus dem nanoskaligen porösen Metall, dessen spezifischer potentialabhängiger Dehnungskoeffizient ein positives Vorzeichen aufweist, nanoporöses Platin oder Iridium umfasst.

6. Element nach einem der Ansprüche 1 bis 4, wobei Kaliumhydroxid, Lithiumperchlorat in Ethylacet oder Tetraethylammoniumtetrafluoroboratlösung in y-Butyrolacton als Elektrolyt eingesetzt wird, die Elektrode aus dem nanoskaligen porösen Metall, dessen spezifischer potentialabhängiger Dehnungskoeffizient ein negatives Vorzeichen aufweist, nanoporöses Palladium oder eine nanoporöse Palladium-Nickel-Legierung umfasst und die Elektrode aus dem nanoskaligen porösen Metall, dessen spezifischer potentialabhängiger Dehnungskoeffizient ein positives Vorzeichen aufweist, nanoporöses Platin oder Iridium umfasst.

7. Anordnung, die mehrere Elemente nach einem der Ansprüche 1 bis 6 umfasst.

8. Anordnung nach Anspruch 7, in der mehrere Elemente nach einem der Ansprüche 1 bis 6 nebeneinander angeordnet sind.

9. Anordnung nach Anspruch 8, in der die Elektroden aus nanoskaligen porösen Metallen, deren spezifische potentialabhängige Dehnungskoeffizienten sich in ihrem Vorzeichen unterscheiden, jeweils einander gegenüberstehen.

10. Anordnung nach einem der Ansprüche 7 bis 9, in der die Elektroden aus nanoskaligen porösen Metallen, deren spezifische potentialabhängige Dehnungskoeffizienten dasselbe Vorzeichen aufweisen, jeweils eine kammartige Anordnung bilden und die Zähne der beiden Anordnungen ineinander ragen.

11. Verwendung des Elements nach einem der Ansprüche 1 bis 6 oder der Anordnung nach einem der Ansprüche 7 bis 10 als Aktuator.

12. Verwendung des Elements nach einem der Ansprüche 1 bis 6 oder der Anordnung nach einem der Ansprüche 7 bis 10 als Sensor zur Bestimmung von Stoffen im Elektrolyten.

## Claims

1. Element, including two electrodes formed from two different nanoscale porous metals, which are situated in a common electrolyte, wherein the specific potential-dependent coefficients of expansion of the two nanoscale porous metals differ in respect of their plus or minus sign.

2. Element according to claim 1, wherein the electrodes are separated from each other by an insulator.

3. Element according to claim 1 or 2, wherein one of the electrodes surrounds the other.

4. Element according to one of claims 1 to 3, wherein pressure-equalising means are provided for the electrolyte.

5. Element according to one of claims 1 to 4, wherein sodium fluoride is used as the electrolyte, the electrode formed from the nanoscale porous metal, the specific potential-dependent coefficient of expansion of which has a minus sign, includes nanoporous gold, and the electrode formed from the nanoscale porous metal, the specific potential-dependent coefficient of expansion of which has a plus sign, includes nanoporous platinum or iridium.

6. Element according to one of claims 1 to 4, wherein potassium hydroxide, lithium perchlorate in ethyl acetate or tetraethyl ammonium tetrafluoroborate solution in γ-butyrolactone is used as the electrolyte, the electrode formed from the nanoscale porous metal, the specific potential-dependent coefficient of expansion of which has a minus sign, includes nanoporous palladium or a nanoporous palladium-and-nickel alloy, and the electrode formed from the nanoscale porous metal, the specific potential-dependent coefficient of expansion of which has a plus sign, includes nanoporous platinum or iridium.

7. Arrangement which includes a plurality of elements according to one of claims 1 to 6.

8. Arrangement according to claim 7, in which a plurality of elements according to one of claims 1 to 6 are disposed adjacent one another.

9. Arrangement according to claim 8, in which the electrodes formed from nanoscale porous metals, the specific potential-dependent coefficients of expansion of which differ in respect of their plus or minus sign, are respectively situated opposite one another.

10. Arrangement according to one of claims 7 to 9, in which the electrodes formed from nanoscale porous metals, the specific potential-dependent coefficients of expansion of which have the same plus or minus sign, respectively form a comb-like arrangement, and the teeth of the two arrangements protrude into one another.

11. Use of the element according to one of claims 1 to 6 or of the arrangement according to one of claims 7 to 10 as an actuator.

12. Use of the element according to one of claims 1 to 6 or of the arrangement according to one of claims 7 to 10 as a sensor to determine substances in the electrolyte.

## Revendications

1. °) Elément comprenant deux électrodes en deux métaux poreux nanométriques différents qui se trouvent dans un électrolyte commun,
**caractérisé en ce que**
les coefficients d'allongement spécifiques, dépendants du potentiel des deux métaux poreux nanométriques, se distinguent au niveau de leur signe.

2. °) Elément selon la revendication 1,
**caractérisé en ce que**
les électrodes sont séparées les unes des autres par un isolant.

3. °) Elément selon la revendication 1 ou 2,
**caractérisé en ce que**
l'une des électrodes entoure l'autre.

4. °) Elément selon l'une quelconque des revendications 1 à 3,
**caractérisé en ce qu'**
on prévoit pour l'électrolyte des moyens servant à compenser la pression.

5. °) Elément selon l'une quelconque des revendications 1 à 4,
**caractérisé en ce que**
du fluorure de sodium sert d'électrolyte, l'électrode en métal poreux nanométrique dont le coefficient d'allongement spécifique dépendant du potentiel présente un signe négatif comprend de l'or nanoporeux et l'électrode en métal poreux nanométrique dont le coefficient d'allongement spécifique dépendant du potentiel présente un signe positif comprend de l'iridium ou du platine nanoporeux.

6. °) Elément selon l'une quelconque des revendications 1 à 4,
**caractérisé en ce que**
la solution d'hydroxyde de potassium, le perchlorate de lithium dans l'acétate d'éthyle ou la solution de tétrafluoroborate d'ammoniac de tétraéthyle dans le y-butyrolacton sert d'électrolyte, l'électrode en métal poreux nanométrique dont le coefficient d'allongement spécifique dépendant du potentiel présente un signe négatif comprend du palladium nanoporeux ou un alliage nanoporeux de palladium/ nickel, et l'électrode en métal poreux nanométrique dont le coefficient d'allongement spécifique dépendant du potentiel présente un signe positif comprend de l'iridium nanoporeux ou du platine.

7. °) Dispositif comprenant plusieurs éléments suivant l'une quelconque des revendications 1 à 6.

8. °) Dispositif selon la revendication 7, dans lequel plusieurs éléments sont agencés l'un à côté de l'autre suivant l'une des revendications 1 à 6.

9. °) Dispositif suivant la revendication 8, dans lequel les électrodes en métaux poreux nanométriques dont les coefficients d'allongement spécifiques dépendant du potentiel se distinguent au niveau de leur signe, sont respectivement opposées les unes aux autres.

10. °) Dispositif selon l'une quelconque des revendications 7 à 9, dans lequel les électrodes en métaux poreux nanométriques dont les coefficients d'allongement spécifiques dépendant du potentiel présentent le même signe forment respectivement un dispositif en peigne, et les dents des deux dispositifs font saillie les unes dans les autres.

11. °) Utilisation de l'élément selon l'une quelconque des revendications 1 à 6, ou du dispositif selon l'une quelconque des revendications 7 à 10, en tant qu'actionneur.

12. °) Utilisation de l'élément selon l'une quelconque des revendications 1 à 6, ou du dispositif selon l'une quelconque des revendications 7 à 10, en tant que capteur servant à déterminer des matériaux dans l'électrolyte.
